# FASCICULE DE BREVET EUROPEEN

(11) **EP 1 518 444 B1**
(45) Date de publication et mention de la délivrance du brevet: **06.08.2014**
(21) Numéro de dépôt: 03753631.5
(22) Date de dépôt: 25.06.2003
(51) Int. Cl.: H05B 3/74, C03B 23/02, B24B 9/10

(54) **PLAQUE VITROCERAMIQUE ET SON PROCEDE DE FABRICATION**
GLASKERAMIKPLATTE UND VERFAHREN ZU IHRER HERSTELLUNG
GLASS-CERAMIC PLATE AND METHOD FOR MAKING SAME

(30) Priorité: 03.07.2002 FR 0208291
(43) Date de publication de la demande: 30.03.2005
(73) Titulaire: Eurokera S.N.C., 02405 Château-Thierry Cedex (FR)
(72) Inventeur: HOBON, Carol, F-77140 NEMOURS (FR); RENAULT, Alain, F-77570 La Madeleine/Loing (FR); HARMAND, Hélène, F-75011 Paris (FR); VILATO, Pablo, F-75014 Paris (FR)
(74) Mandataire: Goldenberg, Virginie Isabelle
(86) Numéro de dépôt international: PCT/FR2003/001952
(87) Numéro de publication internationale: WO 2004/008807

(56) Documents cités:
- WO-A-02/45909
- DE-A- 19 633 706
- US-A- 5 549 100
- US-A- 5 885 315
- US-A1- 2002 023 915

## Description

La présente invention concerne une plaque vitrocéramique destinée, notamment, à couvrir des éléments chauffants, en particulier destinée à servir de plaque de cuisson, les éléments chauffants sous-jacents associés à cette plaque étant par exemple des foyers halogène ou radiant ou de chauffage par induction.

Les ventes de plaques de cuisson en vitrocéramique sont en augmentation constante depuis plusieurs années. Ce succès s'explique notamment par l'aspect attractif de ces plaques et par leur facilité de nettoyage.

Rappelons qu'une vitrocéramique est à l'origine un verre, dit verre précurseur, dont la composition chimique spécifique permet de provoquer par des traitements thermiques adaptés, dits de céramisation, une cristallisation contrôlée. Cette structure spécifique en partie cristallisée confère à la vitrocéramique des propriétés uniques.

Il existe actuellement différents types de plaques en vitrocéramique dont l'aspect peut varier selon le type de chauffage employé ou la destination : plaque blanche ou noire, avec ou sans ouvertures (par exemple, ouvertures pour des brûleurs), présentant des déformations locales (plots de soutien, pliures (comme dans le document US 5549100), cavités (comme dans le document US 5885315), etc), des formes courbes ou droites, des bords inclinés, etc. Chaque variante est le résultat d'études importantes et de nombreux essais, étant donné qu'il est très délicat de faire des modifications sur ces plaques (par exemple sur leur composition) et/ou sur leur procédé d'obtention (changement de température par exemple) sans risquer un effet défavorable sur les propriétés recherchées (structure solide, résistance aux chocs thermiques, aspect lisse, transmission élevée dans les longueurs d'onde du domaine de l'infrarouge et faible dans les longueurs d'onde du domaine du visible sans pour autant masquer les éléments chauffants en état de marche pour des raisons de sécurité, etc.).

Il est ainsi connu de biseauter le bord des plaques par des techniques de meulage pour une meilleure esthétique et pour un confort de manipulation et de nettoyage amélioré, sans nuire à la résistance mécanique des plaques, pour autant que les biseaux restent de largeur limitée (bien inférieure à 35 mm, ces biseaux étant généralement de l'ordre de 12 mm de largeur), l'augmentation de la taille des biseaux posant jusqu'à présent des problèmes, en particulier d'irrégularité de la ligne de crête des biseaux.

La présente invention s'est donc donnée pour tâche de fournir des plaques présentant un nouvel aspect, en particulier présentant des biseaux plus larges que ceux existants sans les problèmes précédemment mentionnés et sans effets néfastes sur les autres propriétés recherchées des plaques.

La plaque selon l'invention est ainsi une plaque, telle qu'une plaque vitrocéramique, destinée notamment à couvrir des éléments chauffants, cette plaque présentant au moins un biseau de largeur supérieure ou égale à 35 mm consécutif à une surélévation (en particulier et de préférence une surélévation sous forme d'une surépaisseur).

La présente invention concerne également un procédé de biseautage d'une plaque, telle qu'une plaque de vitrocéramique, consistant à former au moins une surélévation (en particulier une surépaisseur) sur la plaque et à effectuer un biseautage à partir de la surélévation.

La présente invention concerne également un procédé de fabrication d'une plaque telle qu'une plaque vitrocéramique dans lequel au moins un biseau est taillé (en particulier au moins un bord est biseauté) selon le procédé précédemment défini.

Par plaque vitrocéramique, on entend les plaques réalisées en vitrocéramique, ces plaques résistant à haute température. L'invention n'est pas limitée à la fabrication de plaques de cuisson pour cuisinières ou tables de cuisson mais peut également concerner d'autres plaques qui doivent présenter une grande insensibilité aux variations de température.

La plaque selon l'invention est prioritairement définie par le fait qu'elle présente au moins un biseau de largeur supérieure ou égale à 35 mm. Parallèlement, l'invention couvre aussi une plaque présentant au moins un biseau consécutif à une surélévation, en liaison avec le procédé mis en évidence par la présente invention pour obtenir un biseau plus large comme recherché, ce dernier mode n'excluant pas cependant d'obtenir avec avantages des biseaux de plus petite taille (inférieure à 35 mm). A noter que le biseau selon l'invention, généralement sur au moins un bord ou le pourtour de la plaque, est avantageusement tourné vers l'extérieur de la plaque (en d'autres termes le point le plus bas du biseau est plus près du bord ou de l'extérieur de la plaque que le point le plus haut), notamment pour des questions d'esthétique et de facilité de montage (en particulier le biseau peut être prévu de façon à s'achever sur le bord de la plaque afin que celle-ci affleure le plan de travail sur lequel elle est montée pour permettre un meilleur assemblage). Avantageusement, la présence du ou des biseaux tournés vers l'extérieur en bordure de plaque ne fragilise pas la plaque dans la mesure où le biseau est taillé dans une surélévation et où un talon minimal est conservé en bordure et/ou du fait que la partie surélevée est préférentiellement pleine (surépaisseur). Généralement, le biseau présente un état de surface différent de celui du reste de la plaque, particulièrement poli, brillant, rectiligne, avec une ligne de crête bien définie (formant un angle net avec le reste de la plaque et non un arrondi), dû en particulier au procédé d'obtention préféré explicité ultérieurement formant une surépaisseur, notamment par laminage, puis façonnant le biseau sur la surépaisseur.

De façon générale, la plaque selon l'invention peut présenter un ou des biseaux ou parties biseautées, en particulier un ou des bords biseautés, de largeur plus importante que celle des biseaux habituellement pratiqués sur les plaques vitrocéramiques, en particulier peut présenter un ou des biseaux de largeur supérieure ou égale à 35 mm, pour une épaisseur de la plaque restant généralement inférieure à 4,5 mm, et de préférence inférieure à 4,2 mm, et ceci pour tout type de plaque vitrocéramique. Par « largeur du biseau » on entend la largeur réelle mesurée sur la plaque (largeur L mesurée le long de la pente, du sommet jusqu'au bas du biseau, comme illustré ultérieurement sur les figures) et non la largeur projetée sur le plan de la plaque. Il est en particulier avantageux de prévoir un biseau de grande largeur sur le côté de la plaque destiné à recevoir le ou les moyens de contrôle des éléments de chauffage (boutons de commande, affichage de la température ou du temps, etc.) pour une meilleure mise en valeur, esthétique et accessibilité desdits éléments pour un utilisateur. Le cas échéant, la surélévation adjacente au biseau peut en outre former une barrière de protection desdits éléments de contrôle lorsque des produits sont renversés sur la plaque.

Comme évoqué précédemment, la taille d'un biseau large est en particulier rendue possible par la surélévation (en particulier dans le sens où il s'agit d'une surépaisseur ou surplus de matière ou surcroît de matière) générée à l'endroit souhaité pour former le biseau dans la plaque. Le biseau traverse au moins une partie de la surélévation ou surépaisseur et se poursuit généralement (mais non nécessairement) dans une partie de l'épaisseur « standard » (celle de la plaque dépourvue de surélévation) de la plaque. De préférence, l'épaisseur de la plaque au sommet de la surélévation (après biseautage, voire avant biseautage si celui ci suit un traitement thermique, tel que la céramisation, de la plaque) n'excède pas deux fois, et de préférence 1,5 fois, l'épaisseur standard de la plaque pour éviter des problèmes en particulier de déformation lors de traitements thermiques de la plaque. De préférence également, un talon (ou épaisseur minimale) d'au moins 2 mm (voire d'au moins 2,5 mm) est laissé dans la plaque au point le plus bas du biseau afin de conserver de bonnes propriétés de résistance mécanique au niveau de la plaque, en particulier lorsque le biseau est tourné vers l'extérieur comme évoqué précédemment.

Selon un mode de réalisation de l'invention, le biseau peut être généré en même temps que la surélévation par exemple par une opération de laminage. Ce laminage est alors généralement effectué sur le verre encore malléable (ou « mou ») par l'intermédiaire d'un rouleau portant à sa périphérie l'empreinte en creux (généralement de dimensions, en particulier au moins de profondeur, de l'ordre de ou légèrement supérieures aux dimensions de la surélévation - le cas échéant avec biseau - recherchée), effectuée par exemple par usinage, de la surélévation avec biseau recherchée. Ce laminage peut coïncider par exemple avec le laminage de mise en forme habituellement effectué en sortie de four sur le verre précurseur encore malléable.

Selon un autre mode de réalisation évoqué précédemment, le biseau consécutif à une surélévation est cependant préférentiellement obtenu en au moins deux étapes, la première consistant à générer une surélévation (ou relief) sur la plaque, par exemple par laminage (à l'aide d'un rouleau usiné approprié présentant l'empreinte en creux de la surélévation, les dimensions de l'empreinte étant généralement de l'ordre de ou légèrement supérieures aux dimensions de la surélévation comme évoqué précédemment, ce laminage coïncidant également par exemple avec le laminage de mise en forme), et la seconde consistant à effectuer un biseautage, par façonnage (par exemple par polissage, par l'utilisation de meules inclinées etc.), à partir de ladite surélévation. Ce mode de réalisation est particulièrement avantageux, le biseau obtenu présentant notamment un aspect de surface particulièrement lisse et plat (le biseau obtenu directement par laminage selon le mode précédent pouvant quant à lui présenter un aspect moins lisse ou un profil légèrement en creux ou arrondi en certains endroits).

La surélévation peut également être générée par d'autres moyens que le laminage, en particulier par tout autre moyen de pressage, ou encore par moulage, ou éventuellement par formation d'un pli. Avantageusement, la surélévation consiste en une surépaisseur, impliquant l'augmentation de l'épaisseur et non l'emboutissage de la plaque provoquant une déformation sur ses deux faces. La présence de biseau(x) n'étant recherchée habituellement que sur une face de la plaque (généralement la face supérieure en position d'utilisation), la face opposée n'est préférentiellement pas affectée par l'opération de formation de la ou des surélévations permettant de faire le ou les biseaux et reste généralement approximativement plane (lisse ou munie de picots pour améliorer sa résistance mécanique) en regard de ladite ou desdites surélévations et du ou desdits biseaux formés à partir de cette ou ces surélévations.

Dans un mode de réalisation préféré, la ou les surélévations peuvent être par exemple générées en sortie de four sur le verre précurseur malléable pendant l'opération de laminage en forme, puis après découpe et façonnage éventuels des plaques, et le cas échéant après décoration (revêtement par exemple par un émail formant un ou des motifs), chaque plaque peut être selon les cas céramisée (transformation du verre précurseur en vitrocéramique) puis biseautée (dans ce cas le biseautage n'est effectué que sur les pièces réussies), ou inversement peut être biseautée avant d'être céramisée (dans ce cas le biseautage se fait sur une matière plus tendre), le biseautage se faisant au niveau de la ou des surélévations. De préférence un biseau selon l'invention (« grand » biseau, c'est à dire de largeur supérieure ou égale à 35 mm et/ou biseau consécutif à une surélévation) est prévu sur au moins un côté (ou bord ou bordure) de la plaque (de préférence le côté devant recevoir les éléments de contrôle), voire sur tous les côtés (ou bords) de la plaque.

De préférence selon l'invention, le rapport de la largeur L du biseau sur la hauteur du biseau (ou hauteur de la partie biseautée, cette hauteur h" correspondant, sur les figures ultérieurement représentées, à la valeur H - e), exprimées dans la même unité, est inférieur à 23,3, et de préférence inférieur à 22. La ligne de crête (ou sommet) du biseau obtenu est particulièrement droite, en particulier les ondulations éventuelles de part et d'autre de la droite joignant les deux extrémités de la ligne de crête restent minimes et généralement peu perceptibles à l'oeil nu, contrairement aux ondulations bien visibles observées en cas de biseautage direct sur une grande largeur sur la plaque non munie de surépaisseurs.

Selon les cas, le biseau s'étend sur la largeur de la surélévation ou sur une partie seulement de sa largeur, et éventuellement s'étend également sur une partie de la largeur de la plaque hors de la surélévation. Sur le côté de la surélévation opposé à la partie biseautée, la ligne de crête peut se poursuivre par un à-pic ou une pente ou une zone par exemple horizontale telle qu'un méplat, comme exemplifié ci-après.

L'invention concerne aussi les appareils de cuisson et/ou de maintien à haute température comportant au moins une plaque selon l'invention (par exemple cuisinières et plaques de cuisson encastrables) et comportant, le cas échéant, un ou plusieurs éléments chauffants tels qu'un ou plusieurs éléments radiants et/ou halogènes et/ou un ou plusieurs brûleurs à gaz atmosphérique et/ou un ou plusieurs moyens de chauffage par induction. L'invention englobe aussi bien des appareils de cuisson comportant une seule plaque que des appareils comportant plusieurs plaques, chacune de ces plaques étant à feu unique ou à feux multiples. Par le terme « feu », on entend un emplacement de cuisson. L'invention concerne également des appareils de cuisson mixtes dont la ou les plaques de cuisson comportent plusieurs types de feu (feux à gaz, feux radiants, halogènes ou à induction).

La plaque selon l'invention peut également être munie d'éléments fonctionnels ou de décor, généralement rapportés, tels qu'un ou des connecteurs et/ou câbles, un ou des éléments de commande, etc.

La plaque selon l'invention peut présenter une face inférieure lisse ou munie de picots augmentant sa résistance mécanique et obtenus par exemple par laminage. La plaque peut aussi comporter au moins une zone en relief et/ou au moins une zone en creux et/ou au moins une ouverture, par exemple, dans le cas d'une cuisson par gaz, au moins une ouverture destinée à recevoir un brûleur à gaz atmosphérique. Il peut être prévu que cette ouverture soit façonnée et qu'elle soit au sommet d'une déformation locale de la plaque tel que décrit dans la demande de brevet FR 97 061114 déposée le 20 mai 1997.

D'autres détails et caractéristiques avantageuses ressortiront ci-après de la description de modes de réalisation non limitatifs de l'invention en référence aux dessins annexés dans lesquels :
- les figures 1 a et 1 b représentent de façon schématique en vue de côté les extrémités de plaques obtenues après formation d'une surélévation ou surépaisseur dans une première étape de procédé selon l'invention ;
- les figures 2a, 3a et 2b, 3b représentent de façon schématique en vue de côté différentes variantes des mêmes extrémités de ces mêmes plaques après différents biseautages ;
- la figure 4 représente une vue schématique de dessus de l'extrémité biseautée de la plaque de la figure 2b ;
- la figure 5 comparative présente une vue schématique de dessus de l'extrémité d'une plaque non pourvue préalablement d'une surélévation ou surépaisseur et présentant un biseau de même largeur que celui de la plaque en figure 4.

Dans un souci de clarté, l'échelle entre les différentes parties n'est pas nécessairement respectée. Les mêmes références sont utilisées pour les parties similaires.

Dans les présents modes de réalisation, le verre ayant par exemple une composition telle que l'une de celles indiquées dans les exemples des brevets FR2 657 079 ou FR 2 766 816 est fondu aux alentours de 1650°C en une quantité telle qu'un ruban de verre puisse être laminé, ruban dans lequel des plaques 1 de dimensions finales de l'ordre de 55 cm x 60 cm et présentant une épaisseur standard h de 4 mm sont découpées.

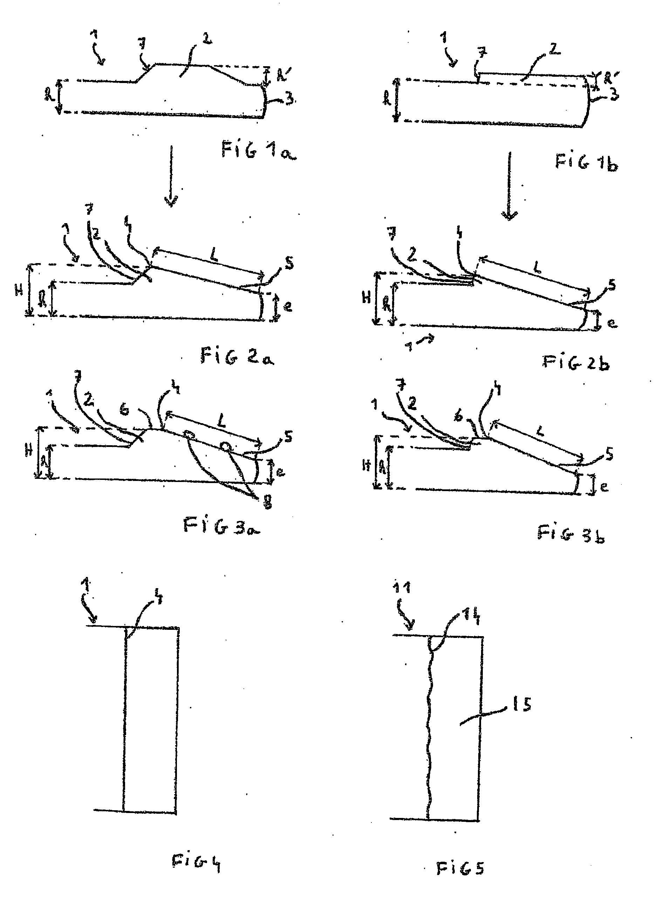

Le rouleau supérieur utilisé pour le laminage présente une empreinte en creux de profondeur par exemple de l'ordre de ou légèrement supérieure à 2 mm et de profil correspondant approximativement au profil de la surépaisseur que l'on veut générer, le rouleau inférieur étant quant à lui gravé pour former des picots (non représentés) en face inférieure de la plaque. Dans le cas de la figure 1a, la surépaisseur 2 est générée sur la plaque à quelques millimètres de la zone de coupe (et donc du bord de la plaque obtenue après découpage), et dans le cas de la figure 1b elle est générée au contact de ladite zone de coupe (et donc sur le bord de la plaque obtenue), la hauteur h' de la surépaisseur étant par exemple de l'ordre de 2 mm. Les plaques laminées peuvent être décorées, par exemple à l'aide d'un émail, ou percées pour l'incorporation ultérieure d'éléments de contrôle. Après découpage des plaques, celles-ci peuvent également être façonnées, en particulier leur chant 3, afin d'éviter, par exemple, la présence d'arêtes vives pouvant blesser les utilisateurs.

Ces plaques de verre sont ensuite, de manière connue en soi, céramisées selon un cycle de céramisation comprenant, par exemple, les étapes suivantes :
a) élévation de la température à 30 à 80 degrés/minutes jusqu'au domaine de nucléation, généralement situé au voisinage du domaine de transformation du verre ;
b) traversée de l'intervalle de nucléation (670 - 800°C) en 15 à 25 minutes;
c) élévation de la température en 15 à 30 minutes jusqu'à la température du palier de céramisation comprise entre 900 et 1100 °C ;
d) maintien de la température du palier de céramisation pendant un temps de 10 à 25 minutes ;
e) refroidissement rapide jusqu'à la température ambiante.

Au bout du cycle de céramisation, la plaque de verre comporte la phase cristalline β quartz et/ou β spodumène.

Avant ou après l'opération de céramisation, une opération de biseautage est effectuée sur la surépaisseur 2 à l'aide d'une meule inclinée. On obtient un biseau 5 de hauteur h" correspondant à la valeur H - e (H étant l'épaisseur de la plaque au sommet du biseau et e celle à la base du biseau, cette épaisseur e coïncidant ici avec l'épaisseur du talon restant), par exemple allant de 1,5 à 3,5 mm et de largeur L allant par exemple de 35 à 82 mm, le rapport L/h" restant avantageusement inférieur à 23,3 et de préférence inférieur à 22. Le biseau présente une ligne de crête 4 parfaitement droite (comme schématisé en figure 4) et peut se prolonger par un méplat 6 et/ou par une paroi inclinée ou droite 7 de la surépaisseur. Avantageusement un talon d'épaisseur e d'au moins 2 mm, et de préférence d'au moins 2,5 mm, est laissé en extrémité de la plaque. Selon la destination de la plaque, celle-ci peut subir également d'autres opérations pendant sa fabrication (déformations pour faire des bossages par exemple ou perçages...) et peut être munie également d'éléments rapportés tels que des éléments de commande 8 (représentés en figure 3a).

A noter que la ligne de crête 14 d'un biseau 15 de même largeur L effectué sur une plaque 11 similaire mais sans surépaisseur et en gardant le même talon minimal se distingue de la ligne de crête des plaques précédentes obtenues selon l'invention en ce qu'elle est ondulée et non parfaitement droite comme représenté en figure 5.

Les plaques selon l'invention peuvent notamment être utilisées avec avantage pour réaliser une nouvelle gamme de plaques de cuisson pour cuisinières ou tables de cuisson.

## Revendications

1. Plaque vitrocéramique (1), destinée notamment à couvrir des éléments chauffants, et présentant une épaisseur (h) généralement inférieure à 4,5 mm, **caractérisée en ce qu'**elle présente au moins un bord biseauté (5) de largeur (L) supérieure ou égale à 35 mm consécutif à une surépaisseur (2).

2. Plaque selon la revendication 1, **caractérisée en ce que** le bord biseauté (5) est destiné à recevoir un ou des moyens de contrôle (8) des éléments de chauffage.

3. Plaque selon l'une des revendications 1 ou 2, **caractérisée en ce que** le bord biseauté (5) est consécutif à une surépaisseur (2), l'épaisseur de la plaque (1) au sommet de la surépaisseur (2) étant inférieure ou égale à deux fois l'épaisseur standard (h) de la plaque.

4. Plaque selon l'une des revendications 1 à 3, **caractérisée en ce qu'**une épaisseur (e) d'au moins 2 mm est laissée dans la plaque au point le plus bas du bord biseauté (5).

5. Plaque selon l'une des revendications 1 à 4, **caractérisée en ce que** la plaque (1) présente une face portant le ou lesdits bords biseautés (5) et **en ce que** la face opposée reste approximativement plane, lisse ou munie de picots, en regard des bords biseautés (5).

6. Plaque selon l'une des revendications 1 à 5, **caractérisée en ce que** le rapport de la largeur (L) du biseau sur la hauteur (h") du biseau, est inférieur à 23,3.

7. Plaque selon l'une des revendication 1 à 6, **caractérisée en ce que** le bord biseauté (5) est consécutif à une surépaisseur (2), bord biseauté (5) s'étendant sur au moins une partie de la largeur de la surépaisseur (2), et éventuellement s'étendant sur une partie de la largeur de la plaque hors de la surépaisseur (2).

8. Procédé de biseautage d'une plaque (1), telle qu'une plaque de vitrocéramique, consistant à former au moins une surépaisseur (2) sur au moins un bord de la plaque (1) et à effectuer au moins un biseautage à partir de la surépaisseur (2).

9. Procédé selon la revendication 8, **caractérisé en ce que** la surépaisseur (2) est générée en même temps que le bord biseauté (5) par exemple par une opération de laminage.

10. Procédé selon la revendication 8, **caractérisé en ce que** le bord biseauté (5) consécutif à une surépaisseur (2) est obtenu en au moins deux étapes, la première consistant à générer une surépaisseur (2) sur la plaque, par exemple par laminage, et la seconde consistant à effectuer un biseautage à partir de ladite surépaisseur (2).

11. Procédé selon l'une des revendications 8 à 10, **caractérisé en ce que** le bord biseauté (5) se trouve sur une face de la plaque (1), la face opposée restant approximativement plane, lisse ou munie de picots en regard dudit bord biseauté (5).

12. Procédé selon la revendication 8, **caractérisé en ce que** la ou les surépaisseurs (2) sont générées en sortie de four sur le verre précurseur malléable pendant l'opération de laminage en forme, chaque plaque (1), après découpe et façonnage éventuels, et le cas échéant après décoration, étant céramisée puis biseautée, ou inversement étant biseautée avant d'être céramisée, le biseautage se faisant au niveau de la ou des surépaisseur (2).

13. Dispositif de cuisson et/ou de maintien à haute température comportant une plaque vitrocéramique selon l'une des revendications 1 à 7.

## Patentansprüche

1. Glaskeramikplatte (1), die insbesondere zur Abdeckung von Heizelementen bestimmt ist und eine Dicke (h) im Allgemeinen von weniger als 4,5 mm aufweist, **dadurch gekennzeichnet, dass** sie wenigstens eine abgeschrägte Kante (5) mit einer Breite (L) von mehr als oder gleich 35 mm im Anschluss an eine Überdicke (2) aufweist.

2. Platte nach Anspruch 1, **dadurch gekennzeichnet, dass** die abgeschrägte Kante (5) dazu bestimmt ist, ein oder mehrere Mittel zur Steuerung (8) der Heizelemente aufzunehmen.

3. Platte nach einem der Ansprüche 1 oder 2, **dadurch gekennzeichnet, dass** die abgeschrägte Kante (5) sich an eine Überdicke (2) anschließt, wobei die Dicke der Platte (1) am höchsten Punkt der Überdicke (2) kleiner als die oder gleich der zweifache(n) Standarddicke (h) der Platte ist.

4. Platte nach einem der Ansprüche 1 bis 3, **dadurch gekennzeichnet, dass** an der niedrigsten Stelle der abgeschrägten Kante (5) eine Dicke (e) von wenigstens 2 mm in der Platte gelassen ist.

5. Platte nach einem der Ansprüche 1 bis 4, **dadurch gekennzeichnet, dass** die Platte (1) eine die abgeschrägte Kante oder Kanten (5) tragende Seite aufweist und dass die entgegengesetzte Seite gegenüber den abgeschrägten Kanten (5) annähernd eben, glatt oder mit Stiften versehen, bleibt.

6. Platte nach einem der Ansprüche 1 bis 5, **dadurch gekennzeichnet, dass** das Verhältnis der Breite (L) der Abschrägung zur Höhe (h") der Abschrägung kleiner als 23,3 ist.

7. Platte nach einem der Ansprüche 1 bis 6, **dadurch gekennzeichnet, dass** die abgeschrägte Kante (5) sich an eine Überdicke (2) anschließt, abgeschrägte Kante (5), die sich über wenigstens einen Teil der Breite der Überdicke (2) und eventuell über einen Teil der Breite der Platte außerhalb der Überdicke (2) erstreckt.

8. Verfahren zum Abschrägen einer Platte (1), wie einer Glaskeramikplatte, das darin besteht, wenigstens eine Überdicke (2) an wenigstens einer Kante der Platte (1) auszubilden und wenigstens ein Abschrägen ab der Überdicke (2) vorzunehmen.

9. Verfahren nach Anspruch 8, **dadurch gekennzeichnet, dass** die Überdicke (2) gleichzeitig mit der abgeschrägten Kante (5) beispielsweise durch einen Walzvorgang erzeugt wird.

10. Verfahren nach Anspruch 8, **dadurch gekennzeichnet, dass** die sich an eine Überdicke (2) anschließende abgeschrägte Kante (5) in wenigstens zwei Schritten erhalten wird, wobei der erste darin besteht, eine Überdicke (2) auf der Platte, beispielsweise durch Walzen, zu erzeugen und der zweite darin besteht, ein Abschrägen ab der Überdicke (2) vorzunehmen.

11. Verfahren nach einem der Ansprüche 8 bis 10, **dadurch gekennzeichnet, dass** die abgeschrägte Kante (5) sich auf einer Seite der Platte (1) befindet, wobei die entgegengesetzte Seite gegenüber der abgeschrägten Kante (5) annähernd eben, glatt oder mit Stiften versehen, bleibt.

12. Verfahren nach Anspruch 8, **dadurch gekennzeichnet, dass** die Überdicke oder Überdicken (2) bei Verlassen des Ofens auf dem formbaren Vorläuferglas während des Formwalzvorganges erzeugt werden, wobei jede Platte (1) nach eventuellem Zuschneiden und eventueller Formgebung, sowie gegebenenfalls nach Verzieren, keramisiert, anschließend abgeschrägt wird oder, umgekehrt, abgeschrägt wird, bevor sie keramisiert wird, wobei das Abschrägen im Bereich der Überdicke oder Überdicken (2) erfolgt.

13. Vorrichtung zum Kochen und/oder zum Halten auf hoher Temperatur, umfassend eine Glaskeramikplatte nach einem der Ansprüche 1 bis 7.

## Claims

1. A glass ceramic plate (1), intended in particular to cover heating elements, and having a thickness (h) generally under 4,5 mm, **characterized in that** it has at least one beveled edge (5) having a width (L) of 35 mm or more following a raised portion (2).

2. The plate as claimed in claim 1, **characterized in that** the bevel (5) is intended to receive one or more means (8) for controlling heating elements.

3. The plate as claimed in one of claims 1 and 2, **characterized in that** the beveled edge (5) follows a raised portion (2), the thickness of the plate (1) at the top of the raised portion (2) being less than or equal to twice the standard thickness (h) of the plate.

4. The plate as claimed in one of claims 1 to 3, **characterized in that** a thickness (e) of at least 2 mm is left in the plate at the lowermost point of the beveled edge (5).

5. The plate as claimed in one of claims 1 to 4, **characterized in that** the plate (1) has one side bearing said beveled edge or edges (5) and **in that** the opposite side remains approximately flat, smooth or equipped with pegs, where facing the beveled edges (5).

6. The plate as claimed in one of claims 1 to 5, **characterized in that** the ratio of the width (L) of the bevel to the height (h") of the bevel is less than 23.3.

7. The plate as claimed in one of claims 1 to 6, **characterized in that** the beveled edge (5) follows a raised portion (2), the beveled edge (5) extending over at least part of the width of the raised portion (2), and possibly extending over part of the width of the plate outside the raised portion (2).

8. A method for beveling a plate (1), such as a glass-ceramic plate, consisting in forming at least one raised portion (2) on at least one edge of the plate (1) and in making at least one beveling from the raised portion (2).

9. The method as claimed in claim 8, **characterized in that** the raised portion (2) is generated at the same time as the beveled edge (5) for example by a rolling operation.

10. The method as claimed in claim 8, **characterized in that** the beveled edge (5) following a raised portion (2) is obtained in at least two steps, the first consisting in generating a raised portion (2) on the plate, for example by rolling, and the second consisting in beveling from said raised portion (2).

11. The method as claimed in one of claims 8 to 10, **characterized in that** the beveled edge (5) is on one side of the plate (1), the opposite side remaining approximately flat, smooth or equipped with pegs where facing said beveled edge (5).

12. The method as claimed in claim 8, **characterized in that** the raised portion or portions (2) are generated on leaving the furnace on the malleable precursor glass during the operation of rolling to shape, each plate (1), after any possible cutting and/or shaping, and if necessary after decoration, being ceramified then beveled, or alternatively being beveled before being ceramified, the beveling being done at the raised portion or portions (2).

13. A cooking and/or temperature-maintaining device comprising a glass-ceramic plate as claimed in one of claims 1 to 7.
